# EUROPÄISCHE PATENTSCHRIFT

(11) **EP 3 536 548 B1**
(45) Veröffentlichungstag und Bekanntmachung des Hinweises auf die Patenterteilung: **07.09.2022**
(21) Anmeldenummer: 19159591.7
(22) Anmeldetag: 27.02.2019
(51) Int. Cl.: B60N 2/015, B60N 2/38, B60N 2/16, B60N 2/60

(54) **FLURFÖRDERZEUG MIT EINER FAHRERKABINE**
INDUSTRIAL TRUCK WITH A DRIVER'S CAB
CHARIOT DE MANUTENTION DOTÉ D'UNE CABINE DE CONDUCTEUR

(30) Priorität: 08.03.2018 DE 102018105408
(43) Veröffentlichungstag der Anmeldung: 11.09.2019
(73) Patentinhaber: Jungheinrich Aktiengesellschaft, 22047 Hamburg (DE)
(72) Erfinder: Heusinger, Sebastian, 22397 Hamburg (DE)
(74) Vertreter: Hauck Patentanwaltspartnerschaft mbB

(56) Entgegenhaltungen:
- FR-A1- 2 359 783
- JP-A- 2003 081 587
- US-A1- 2006 244 281

## Beschreibung

Gegenstand der Erfindung ist ein Flurförderzeug mit einer Fahrerkabine, die einen Fahrersitz für eine Bedienperson aufweist.

Flurförderzeuge mit Sitzplatz für den Fahrer werden unter ergonomischen Gesichtspunkten im Hinblick auf die Sitzhöhe ausgelegt. Bei den ergonomischen Betrachtungen steht die Körpergröße der Bedienperson im Vordergrund, wobei versucht wird, entsprechend der Körpergröße eine geeignete Sitzhöhe zu definieren. Bei Flurförderzeugen ist es üblich, dass ein Fahrersitz, der eine eigene zu montierende Einheit darstellt, auf einem Sitzträger montiert wird. Der Sitzträger ist fest in einer vorbestimmten Position in der Fahrerkabine des Flurförderzeuges angebracht, die Sitzhöhe als die Höhe der Sitzfläche über einem Boden in der Fahrerkabine ist hierbei eine wichtige ergonomische Größe.

Höhenanpassungen für Fahrersitze sind bekannt. Die Höhenanpassung kann mechanisch, elektrisch, pneumatisch und auch hydraulisch erfolgen. Verstellt wird hierbei der Fahrersitz selbst mit seiner Sitzfläche. Die Kosten für höhenverstellbare Sitze sind in der Regel deutlich höher als die Kosten für nicht höhenverstellbare Sitze. Andererseits besteht das Bedürfnis, den Fahrersitz gerade bei weltweit vertriebenen Fahrzeugmodellen anpassen zu können. Die ergonomische Anforderung eines kleinen Fahrzeugführers und die eines großen Fahrers oder einer großen Fahrerin sind zu verschieden, als dass Fahrzeuge ohne höhenverstellbare Fahrersitze in stark unterschiedlichen Geozonen ergonomisch sinnvoll genutzt werden können.

JP 2003-081587 beschreibt einen Schubmaststapler, der mit einer Abstützung für den stehenden Fahrer ausgestattet ist (standing seat type). Dieses nicht als Sitz, sondern als Abstützung im Stand ausgebildete Element besitzt ein Polster, das auf einem Gewindeschaft angeordnet ist. Gegenüber einem Zylinderrohr kann der Schaft durch Drehen in der Höhe verstellt werden. Das Zylinderrohr ist Teil eines schwenkbar an der Fahrzeugwand angeordneten Schwingarms, der um eine vertikale Achse schwenkbar an der Fahrzeugwand angeordnet ist Dieser Halter für den Schwingarm ist über Schrauben mit der Rückwand verbunden. Alternativ ist auch ein mit einer Seitenwand verbundener Sitzträger offenbart, welcher lösbar in mindestens zwei verschiedenen Höhen an der Seitenwand befestigt werden kann und einen Fahrersitz für eine Bedienperson trägt.

FR 2 359 783 beschreibt ein Flurförderzeug mit einem quer zur Längsrichtung angeordneten Sitz, der mit seiner Rückenwand zu einer Seitenwand angeordnet ist.

US 2006/0244281 A1 beschreibt einen Sitz für ein kleines Passagierfahrzeug, wie beispielsweise ein Golfmobil. Der Sitz wird hier auf mit dem Fahrzeugrahmen verbundenen Querträgern montiert.

Der Erfindung liegt die Aufgabe zugrunde, ein Flurförderzeug mit einem Fahrersitz bereitzustellen, das mit einfachen Mitteln eine Anpassung an unterschiedliche Höhen der Sitzfläche gestattet.

Erfindungsgemäß wird die Aufgabe durch ein Flurförderzeug mit den Merkmalen aus Anspruch 1 gelöst. Vorteilhafte Ausgestaltungen bilden die Gegenstände der Unteransprüche.

Das erfindungsgemäße Flurförderzeug ist mit einer Fahrerkabine ausgestattet, die einen Fahrersitz für eine Bedienperson aufweist. Die Fahrerkabine beinhaltet Bedienelemente, die von einer bevorzugt auf dem Fahrersitz sitzenden Person bedient werden können. Die Fahrerkabine kann mit oder ohne Fahrerschutzdach ausgebildet sein. Für den Fahrersitz ist erfindungsgemäß ein Sitzträger vorgesehen, der mit zwei verschiedenen Seitenwänden der Fahrerkabine lösbar verbunden ist.

Ferner ist ein Befestigungsmittel vorgesehen, das an den zwei Seitenwänden der Fahrerkabine befestigt, dazu ausgebildet ist, dass der Sitzträger in mindestens zwei verschiedenen Höhen an der Seitenwand befestigt werden kann. Bei dem erfindungsgemäßen Flurförderzeug und seiner Montage des Fahrersitzes wird auf einen Sitzträger zurückgegriffen, auf den der Fahrersitz montiert werden kann. Der Sitzträger selbst ist mit zwei verschiedenen Seitenwänden, die eine Begrenzung der Fahrerkabine bilden, lösbar verbunden und erlaubt es, den Fahrersitz abzustützen.

Eine zusätzliche Abstützung des Sitzträgers kann entfallen, insbesondere eine Abstützung gegenüber dem Boden der Fahrerkabine. Das Befestigungsmittel stützt den Sitzträger gegenüber der Seitenwand ausreichend ab, um den Fahrersitz stabil tragen zu können. Das Befestigungsmittel erlaubt, den Sitzträger in mindestens zwei verschiedenen Höhen zu befestigen. Der erfindungsgemäße Ansatz eines in verschiedenen Höhen montierbaren Sitzträgers bietet eine Anpassung an unterschiedliche Sitzhöhen, ohne dass höhen verstellbare Sitze Verwendung finden müssen. Je nach erwarteter Durchschnittsgröße für die Fahrer oder die Fahrerin des Fahrzeugs kann eine Befestigungshöhe ausgewählt und der Sitzträger in der entsprechenden Höhe an der Seitenwand angebracht werden. Der in verschiedenen Höhen anbringbare Sitzträger kann auch bei höhenverstellbaren Sitzen in vorteilhafter Weise zum Einsatz kommen. Höhenverstellbare Sitze haben meist eine größere Bauhöhe als nicht höhenverstellbare Sitze. Soll beispielsweise ein höhenverstellbarer Sitz nachgerüstet werden, sitzt der Fahrer möglicher Weise auch in der tiefsten Position des Sitzes höher. Der Verstellbereich des Sitzes nach unten wird somit teilweise oder sogar ganz aufgehoben. Erfindungsgemäß kann hier der Sitzträger tiefer gesetzt und somit, wenn gewünscht, die größere Bauhöhe ausgleichen. Liegt das Augenmerk auf einer Verstellung nach oben, kann auf die Maßnahme auch verzichtet werden, wodurch ein Plus an Variabilität gegeben ist.

Erfindungsgemäß ist das Befestigungsmittel als ein erstes Befestigungsmittel ausgebildet, das ein von dem Sitzträger vorstehendes Einsteckelement aufweist, um in einer in der Seitenwand vorgesehenen Aufnahme, bevorzugt formschlüssig angeordnet zu werden. Die Aufnahme ist vorgesehen, um das Einsteckelement des Sitzträgers aufzunehmen und so den Sitzträger vor und bei seiner Montage abzustützen. Dazu sind zwei Aufnahmen vorgesehen, die es erlauben, den Sitzträger in verschiedenen Höhen an der Seitenwand festzulegen. Die Montage des Sitzträgers erfolgt mit dem formschlüssig in die Aufnahme gesteckten Einsteckelement, wodurch auch der noch nicht befestigte Sitzträger bei der Montage abgestützt wird. Das erste Befestigungsmittel ist an der Seitenwand der Fahrerkabine angeordnet, die bevorzugt im vollständig montierten Zustand der Rückenlehne des Fahrersitzes zugewandt ist. Auch bei einer Montage des Sitzträgers ohne vormontierten Fahrersitz wird als Seitenwand der Fahrerkabine diejenige Seitenwand gewählt, die den Bedienelementen gegenüberliegt und daher nach der Montage des Sitzes dessen Rückenlehne zugewandt ist.

Erfindungsgemäß weist der Sitzträger einen Querträger auf, der endseitig mit einem zweiten Befestigungsmittel ausgestattet ist. Das zweite Befestigungsmittel ist zusätzlich zu dem ersten Befestigungsmittel vorgesehen. Das zweite Befestigungsmittel weist eine Querträgerbefestigungsplatte mit Befestigungsbohrungen auf und die zweite Seitenwand ist mit Mitteln zur Anbringung der Querträgerbefestigungsplatte in verschiedenen Höhen ausgestattet. Die Mittel zur Anbringung können beispielsweise Schweißbolzen sein, aber auch Bohrungen mit oder ohne Gewinde für Schrauben, Stifte und dergleichen sind denkbar. Das zweite Befestigungsmittel besteht aus einer am Querträger endseitig vorgesehenen Querträgerbefestigungsplatte und den korrespondierenden Mitteln zur Anbringung an der Seitenwand. Die Querträgerbefestigungsplatte wird an einer der Seitenwände befestigt, wofür auch die Querträgerbefestigungsplatte mit Befestigungsbohrungen ausgestattet ist. Die Seitenwand besitzt Mittel zur Anbringung der Querträgerbefestigungsplatte. Die Bohrungen in der Querträgerbefestigungsplatte und die Mittel zur Anbringung an der Seitenwand sind derart angeordnet, dass der Sitzträger mit seinem Querträger in den verschiedenen Höhen an der Seitenwand angeordnet und befestigt werden kann. Vorteilhaft an dem zweiten Befestigungsmittel ist, dass es gerade im Zusammenspiel mit dem ersten Befestigungsmittel eine einfache Montage des Sitzträgers an einer ersten und einer zweiten Seitenwand der Fahrerkabine erlaubt. Durch das Einschieben des Einsteckelements in die Aufnahme bleibt der Sitzträger im Rahmen seines Formschlusses verschwenkbar und die Höhe des Querträgers ist in einem gewissen Bereich für das zweite Befestigungsmittel veränderlich. Hierdurch kann der Querträger in der durch das erste Befestigungsmittel vorgegebenen Höhe endgültig mit dem zweiten Befestigungsmittel montiert werden.

In einer bevorzugten Ausgestaltung ist auch die zweite Seitenwand mit einer Befestigungsplatte ausgestattet. Die Befestigungsplatte wird mit einer Seite flach auf die Seitenwand gesetzt, wobei die Mittel zur Anbringung der Querträgerbefestigungsplatte entweder an der Befestigungsplatte oder an der Seitenwand vorgesehen sind und durch die Befestigungsplatte vorstehen.

In einer besonders bevorzugten Ausgestaltung ist an der Befestigungsplatte ein Stützvorsprung vorgesehen, auf dem die noch zu montierende Querträgerbefestigungsplatte abgestützt werden kann. Durch die Abstützung der Querträgerbefestigungsplatte auf dem Stützvorsprung, kann der Sitzträger insgesamt in einer abgestützten Position montiert werden und muss während der Montage nicht gehalten sein. Alternativ oder zusätzlich kann eine der Bohrungen an der Querträgerbefestigungsplatte als eine Ausnehmung ausgebildet sein, mit der die Querträgerbefestigungsplatte auf das Mittel zur Anbringung der Querträgerplatte abgestützt werden kann. Ist das Mittel zur Anbringung der Querträgerplatte ein Schweißbolzen, so kann dieser ähnlich wie bei dem Stützvorsprung der Befestigungsplatte den Querträger abstützen. Durch eine zuvor oder nach dem Positionieren teilweise eingedrehten Schraube oder bei Schweißbolzen aufgedrehten Mutter entsteht zusätzlich ein Formschluss, der es ermöglicht den Sitzträger loszulassen, ohne dass dieser runterfällt. Dies erleichtert die Montage zusätzlich.

In einer bevorzugten Ausgestaltung ist an dem Sitzträger ein drittes Befestigungsmittel vorgesehen, das an dem Sitzträger zur Befestigung an der zweiten Seitenwand in verschiedenen Höhen vorgesehen ist. Das dritte Befestigungsmittel wird gemeinsam mit dem ersten und zweiten Befestigungsmittel eingesetzt. Das dritte Befestigungsmittel kann eine Befestigungsbohrung im Sitzträger aufweisen, die mit mehreren, in verschiedenen Höhen vorgesehenen Mitteln zur Anbringung an der Seitenwand zusammenwirkt. Das dritte Befestigungsmittel kann auch als eine Lasche am Sitzträger mit einer Befestigungsbohrung ausgebildet sein.

In einer bevorzugten Ausgestaltung ist das Flurförderzeug mit einem höhenverstellbaren Sitz ausgestattet. Bevorzugt ist hierbei vorgesehen, dass durch die verschiedenen Höhen, in denen der Sitzträger montiert werden kann, der Höhenunterschied zwischen dem höhenverstellbaren und einem nicht höhenverstellbaren Sitz in seiner Mittenstellung ausgeglichen wird. Fahrzeuge besitzen dann stets dieselbe Sitzhöhe, unabhängig davon, ob der Sitz höhenverstellbar ist oder nicht, wobei natürlich durch die Höhenverstellung der höhenverstellbare Sitz, ausgehend von seiner mittleren Sitzhöhe noch weitere Sitzhöhen annehmen kann.

Ein weiterer besonderer Vorteil wird in einer Ausgestaltung deutlich, in der der Sitzträger Haltemittel für eine Sitzsockelverkleidung aufweist. Die Sitzsockelverkleidung kann bei dieser Ausgestaltung beispielsweise hängend an dem Sitzträger montiert werden und ist somit leicht und bevorzugt werkzeuglos von dem Sitzträger entfernbar, um Arbeiten unterhalb des Sitzträgers auszuführen.

Erfindungsgemäß wird der Sitzträger an zwei verschiedenen Seitenwänden montiert, wobei diese bevorzugt aneinandergrenzen.

Eine bevorzugte Ausgestaltung des erfindungsgemäßen Fahrzeugs wird an den nachfolgenden Figuren erläutert. Es zeigen:
- Fig. 1: ein Flurförderzeug mit einer Fahrerkabine in der Ansicht auf die Fahrerkabine bei tiefmontiertem Sitz,
- Fig. 2: das Flurförderzeug aus Fig. 1 bei hochmontiertem Sitz,
- Fig. 3: eine Detailansicht des Fahrersitzes aus Fig. 2 bei abgenommener Sitzsockelverkleidung,
- Fig. 4: eine Detailansicht auf die Befestigung des Sitzträgers an der Kabinenrückwand,
- Fig. 5: eine weitere Detailansicht zur Fig. 4 und
- Fig. 6: eine Detailansicht des Bereichs hinter dem montierten Sitz.

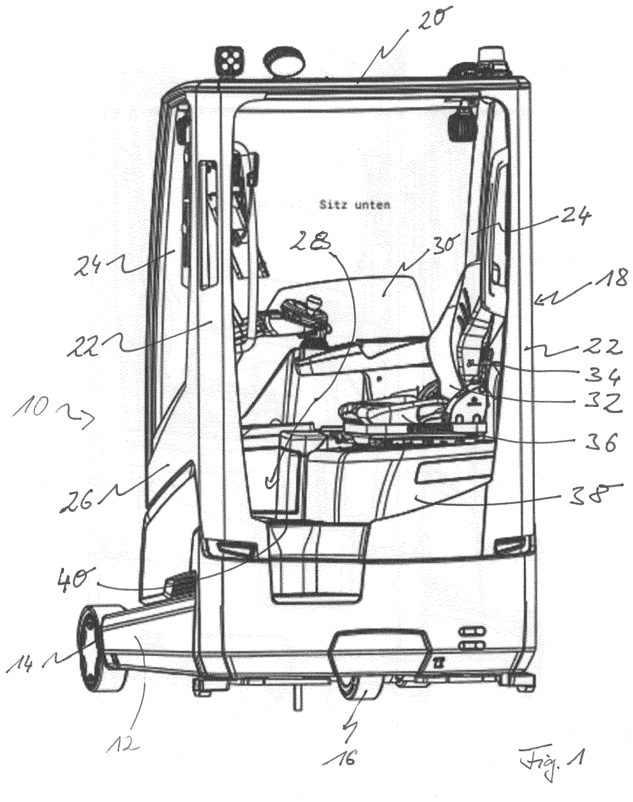

Fig. 1 zeigt ein Flurförderzeug 10, das ein dreirädriges Fahrwerk besitzt. Über ein Paar von Lastarmen 12 ist ein Paar von Lasträdern 14 vorgesehen. Unterhalb der Fahrerkabine 18 befindet sich ein gelenktes und angetriebenes Rad 16. Die Fahrerkabine 18 ist mit einem Fahrerschutzdach 20 ausgestattet. Die Fahrerkabine 18 ist ein als eine 4-Säulen-Fahrerkabine ausgebildet, die zwei A-Säulen 22 und zwei B-Säulen 24 besitzt. Zwischen den A-Säulen 22 ist ein Einstieg in die Fahrerkabine 18 vorgesehen. Zwischen den A- und den B-Säulen befindet sich jeweils eine Seitenwand 26, zwischen den B-Säulen 24 befindet sich eine weitere Seitenwand 28. In Fig. 1 ist zusätzlich eine zwischen den B-Säulen angeordnete Schutzscheibe 30 zu erkennen, die bei der Verwendung des Flurförderzeugs beispielsweise als Schubmaststapler, den Hubmast (nicht dargestellt) mit seinen beweglichen Teilen gegenüber dem Kabineninnenraum abtrennt. In der Fahrerkabine selbst ist ein Fahrersitz 32 vorgesehen, der eine Rückenlehne 34 und ein Sitzteil 36 besitzt. Der Fahrersitz 32 ist als eine Montageeinheit ausgebildet und wird in einem Stück in dem Fahrzeug montiert. Unterhalb des Fahrersitzes 32 befindet sich die Sitzsockelverkleidung 38. Anders als bei vielen Ausgestaltungen im Stand der Technik ist die Sitzsockelverkleidung 38 nicht als ein tragendes oder stützendes Bauelement ausgebildet. Vielmehr, wie nachfolgend noch erläutert wird, ist die Sitzsockelverkleidung als ein hängendes Verkleidungsteil aufgebaut und kann als eine leichte Kunststoffverkleidung ausgebildet sein.

Fig. 1 zeigt den Fahrersitz 32 in seiner tieferen Position. Der vormontierten Position des Fahrersitzes 32 entspricht auch, dass die Sitzsockelverkleidung 38 tiefer im Fahrzeug, d. h. näher zum Boden 40 der Fahrerkabine angeordnet ist.

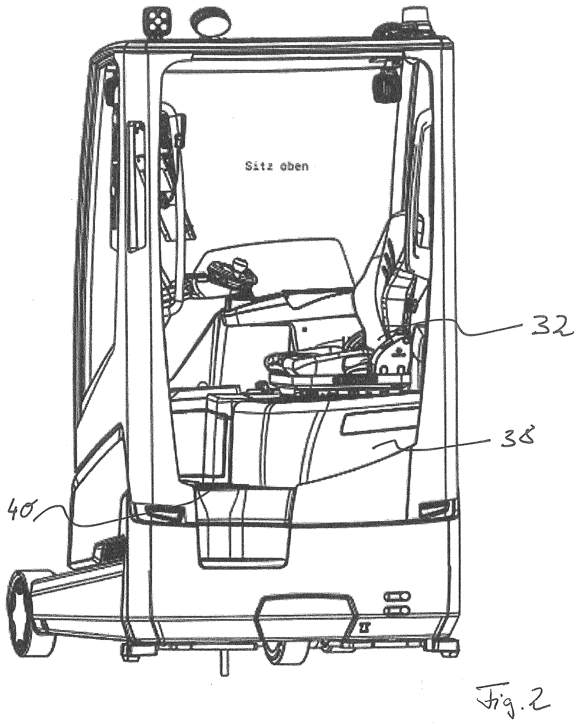

Die in den Fign. 1 und 2 dargestellten Positionen für den Fahrersitz sind ergonomisch auf die Anforderungen der Fahrer abstimmt. Werden beispielsweise bei den Fahrern überdurchschnittlich viele große Personen eingesetzt, so können Fahrzeuge mit der niedrigeren Sitzposition ausgeliefert werden, während bei der Verwendung der Fahrzeuge durch überwiegend kleinere Fahrer die höhere Position ausgewählt werden kann. Auch kann je nach weltweiter Absatzregion eine unterschiedliche Höhenmontage gewählt werden, beispielsweise für Fahrzeuge, die für den Markt durchschnittlich größerer Menschen bestimmt sind, kann die niedrigere Sitzposition konfiguriert werden, während für Fahrzeuge, die für einen Markt durchschnittlich kleinerer Menschen vorgesehen sind, die höhere Sitzposition konfiguriert wird.

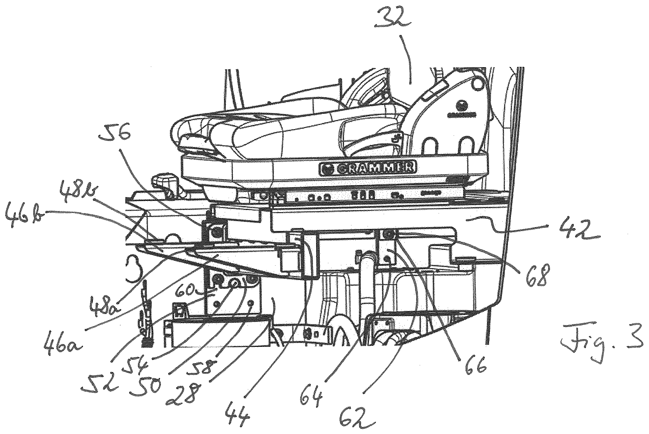

Erfindungsgemäß wird die Möglichkeit, den Fahrersitz in zwei unterschiedlichen Positionen zu montieren, durch die Verwendung eines Sitzträgers 42 erleichtert. Der Sitzträger 42 besitzt einen Querträger 44, der in dem dargestellten Ausführungsbeispiel als ein hohles Rechteckprofil dargestellt ist. An dem Querträger 44 sind zwei Abstützabschnitte 46a, 46b angebracht. Jeder der Abschnitte 46 besitzt an seinem von dem Fahrersitz 32 fortweisenden Ende ein Aufnahmelager 48a, 48b, an dem die Sockelverkleidung 38 spielfrei eingesteckt (Steckverbindungselemente) werden kann. Der Querträger 44 besitzt an seiner zur zweiten Seitenwand 28 weisenden Seite eine Querträgerbefestigungsplatte 50. Die Querträgerbefestigungsplatte 50 liegt flächig auf einer Befestigungsplatte 52 auf, die an der zweiten Seitenwand 28 der Fahrerkabine angeordnet ist. Die Befestigungsplatte 52 besitzt einen Stützvorsprung 54, auf dem die Querträgerbefestigungsplatte 50 mit einer Ausnehmung aufsitzt. Die Querträgerbefestigungsplatte 50 besitzt eine ungefähr rechteckige Form mit abgerundeten Ecken, wobei vier Befestigungsbohrungen jeweils in den Ecken dargestellt sind. Durch die Befestigungsbohrungen sind, wie in Fig. 3 dargestellt, Befestigungsschrauben 56 mit ihrem Schraubenkopf zu erkennen. Alternativ zu den dargestellten Befestigungsschrauben können auch Schweißbolzen oder andere Mittel zur Anbringung vorgesehen sein. In der Befestigungsplatte 52 sind unterhalb der Querträgerbefestigungsplatte 50 Bohrungen 58 zu erkennen, die für eine Montage des Sitzträgers 42 in der tieferen Position vorgesehen sind. Ebenfalls in Fig. 3 zu erkennen ist, dass eine der Bohrungen in der Querträgerbefestigungsplatte 50 als eine Ausnehmung 60 ausgebildet ist. Hierdurch kann die Querträgerbefestigungsplatte 50 auch ohne einen Stützvorsprung 54 für die weitere Montage abgestützt werden, wenn zuvor eine entsprechende Befestigungsschraube mindestens teilweise eingedreht ist.

Auch das dritte Befestigungsmittel des Sitzträgers ist in Fig. 3 zu erkennen. Hierfür ist auf der zweiten Seitenwand 28 eine Befestigungsplatte 62 angebracht. Die Befestigungsplatte 62 besitzt zwei Bohrungen 64, von denen die untere in der Fig. 3 zu erkennen ist. An dem Sitzträger 42 ist ein Befestigungsabschnitt 66 vorgesehen, durch den eine Schraube mit Schraubenkopf 68 geführt ist. Wird der Sitzträger 42 in seiner unteren Position montiert, so wird über den Befestigungsabschnitt 66 des Sitzträgers 42 an der unteren Befestigungsbohrung 64 befestigt. Der Sitz 32 ist in an sich bekannter Art und Weise auf dem Sitzträger 42 befestigt.

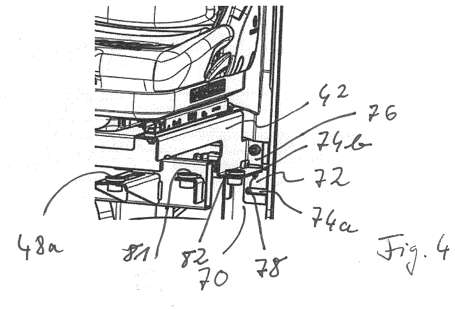

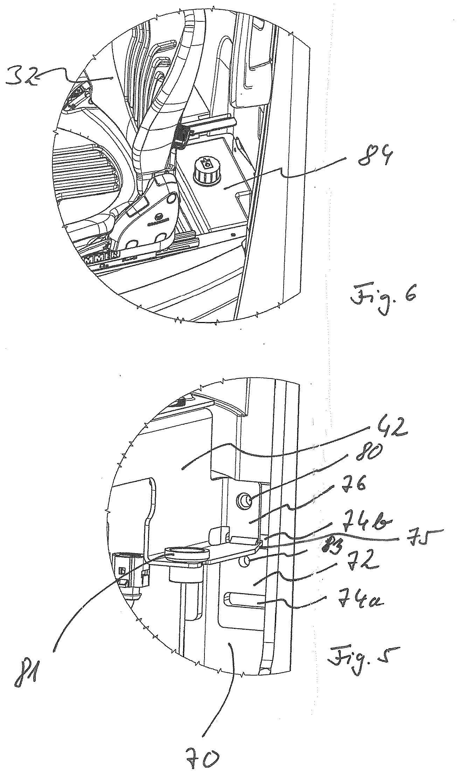

Fign. 4 und 5 gewähren einen ausschnittsweisen Einblick in die Fahrerkabine. An der ersten Seitenwand 26, 70 der Fahrerkabine ist eine Befestigungsplatte 72 mit zwei Schlitzen 74a, 74b angebracht. Die Schlitze 74a, 74b bilden hierbei Ausnehmungen. Die Schlitze 74a, 74b können so ausgebildet sein, dass sie sich auch durch die erste Seitenwand 26, 70 erstrecken oder sich in der Tiefe auf die Dicke der Befestigungsplatte 72 beschränken. Der Sitzträger 42 besitzt seitlich einen angesetzten Winkelabschnitt 76, der in seinem Knickbereich ein Einsteckelement 75 besitzt, der nach hinten zur ersten Seitenwand 26, 70 vorsteht. Das Einsteckelement 75 ist in dem dargestellten Beispiel in dem Schlitz 74b angeordnet und stützt so den Sitzträger 42 ab. Das Einsteckelement kann je nach Form und Geometrie der Ausnehmungen 74a,b beispielsweise als Zunge ausgebildet sein, die formschlüssig in einer der als Schlitze ausgebildeten Ausnehmungen angeordnet ist. Auch kann das Einsteckelement als ein Stift ausgebildet sein, wobei die Ausnehmung an dem Querschnitt des Stifts angepasst ist. Befestigt wird der Winkelabschnitt 76 über eine Befestigungsschraube 78 in der Bohrung 80. Für eine Montage des Sitzträges 42 in der unteren Position ist die Bohrung 83 vorgesehen.

In Fig. 4 ferner zu erkennen, sind Abstützpunkte 81, 82 für die Sitzsockelverkleidung.

Fig. 6 zeigt den fertig montierten Fahrersitz 32 in einer Detailansicht. Deutlich zu erkennen ist hinter dem Fahrersitz die freie Sicht und der freie Zugang zu dem Hydrauliktank 84. Im regulären Betrieb ist der Hydrauliktank 84 durch eine Zugangsklappe (nicht dargestellt) abgedeckt. Hinter dem Fahrersitz befindet sich der Hydrauliktank 84, der nach einem Entfernen der Zugangsklappe beispielsweise für Prüfung des Füllstandes, Tätigkeiten des Nachfüllens oder eine Sichtkontrolle frei zugänglich ist. Für kleine Servicearbeiten oder Sichtprüfungen braucht der Sitz nicht abgenommen zu werden, ebenso wenig wie der Sitzträger. Durch die freitragende Anbindung reicht es, die Sitzsockelverkleidung zu entfernen, dies kann auch werkzeuglos erfolgen.

### Bezugszeichenliste

- 10: Flurförderzeug
- 12: Lastarme
- 14: Lasträder
- 16: Rad
- 18: Fahrerkabine
- 20: Fahrerschutzdach
- 22: A-Säulen
- 24: B-Säulen
- 26: Seitenwand
- 28: Seitenwand
- 30: Schutzscheibe
- 32: Fahrersitz
- 34: Rückenlehne
- 36: Sitzteil
- 38: Fahrersockelverkleidung
- 40: Boden
- 42: Sitzträger
- 44: Querträger
- 46a,b: Abstützabschnitte
- 48a,b: Aufnahmelager
- 50: Querträgerbefestigungsplatte
- 52: Befestigungsplatte
- 54: Stützvorsprung
- 56: Befestigungsschrauben
- 58: Bohrungen
- 60: Ausnehmung
- 62: Befestigungsplatte
- 64: Bohrungen
- 66: Befestigungsabschnitt
- 68: Schraube mit Schraubenkopf
- 70: Seitenwand
- 72: Befestigungsplatte
- 74a,b: Schlitze
- 75: Einsteckelement
- 76: Winkelabschnitt
- 78: Befestigungsschraube
- 80: Bohrung
- 81: Abstützpunkt
- 82: Abstützpunkt
- 83: Bohrung
- 84: Fahrersitz

## Patentansprüche

1. Flurförderzeug (10) mit einer Fahrerkabine (18), die einen mit mindestens einer Seitenwand der Fahrerkabine lösbar verbundenen Sitzträger (42) aufweist, der in mindestens zwei verschiedenen Höhen an der mindestens einen Seitenwand befestigt werden kann und einen Fahrersitz (32) für eine Bedienperson trägt, **gekennzeichnet durch**:
a. einen mit zwei verschiedenen Seitenwänden (26, 28) der Fahrerkabine (18) lösbar verbundenen Sitzträger (42) und
b. ein Befestigungsmittel, das an den zwei Seitenwänden (26,28) der Fahrerkabine (18) befestigt und dazu ausgebildet ist, dass der Sitzträger (42) in mindestens zwei verschiedenen Höhen an den Seitenwänden befestigt werden kann, wobei
das Befestigungsmittel ein erstes Befestigungsmittel aufweist, das ein von dem Sitzträger (42) vorstehendes Einsteckelement (75) besitzt, wobei eine der Seitenwände (26, 28) zwei in verschiedener Höhe vorgesehene Aufnahmen (74a, 74b) für das vorstehende Einsteckelement (75) aufweist, und der Sitzträger (42) einen Querträger (44) besitzt, der endseitig mit einem zweiten Befestigungsmittel ausgestattet ist, das eine Querträgerbefestigungsplatte (50) mit Befestigungsbohrungen besitzt und die zweite der beiden Seitenwände (26, 28) Mittel zur Anbringung der Querträgerbefestigungsplatte (50) aufweist, wobei
Befestigungsbohrungen und die Mittel zur Anbringung des Querträgers (44) an der zweiten Seitenwand in verschiedenen Höhen angeordnet sind.

2. Flurförderzeug nach Anspruch 1, **dadurch gekennzeichnet, dass** eine der Seitenwände an einer der Rückenlehne (34) des Fahrersitzes (32) zugewandten Seite angeordnet ist.

3. Flurförderzeug nach Anspruch 1, **dadurch gekennzeichnet, dass** die zweite Seitenwand eine Befestigungsplatte (52) mit einen Stützvorsprung (54) aufweist, auf dem die noch zu montierende Querträgerbefestigungsplatte (50) abgestützt werden kann.

4. Flurförderzeug nach Anspruch 3, **dadurch gekennzeichnet, dass** eine der Bohrungen an der Querträgerbefestigungsplatte (50) als eine Ausnehmung (60) ausgebildet ist, mit der die Querträgerbefestigungsplatte (50) auf dem Mittel zur Anbringung der Querträgerplatte abgestützt montiert werden kann.

5. Flurförderzeug nach einem der Ansprüche 1 bis 4, **dadurch gekennzeichnet, dass** das Befestigungsmittel ein drittes Befestigungsmittel aufweist und an dem Sitzträger (42) das dritte Befestigungsmittel vorgesehen ist, das zur Befestigung an der zweiten Seitenwand in verschiedenen Höhen vorgesehen ist.

6. Flurförderzeug nach Anspruch 5, **dadurch gekennzeichnet, dass** das dritte Befestigungsmittel eine Befestigungsbohrung an dem Sitzträger (42) und mehrere in verschiedenen Höhen vorgesehene Mittel zur Anbringung des dritten Befestigungsmittels an der zweiten Seitenwand aufweist.

7. Flurförderzeug nach einem der Ansprüche 1 bis 6, **dadurch gekennzeichnet, dass** der Fahrersitz (32) in seiner Höhe verstellbar ist.

8. Flurförderzeug nach einem der Ansprüche 1 bis 7, **dadurch gekennzeichnet, dass** der Sitzträger (42) Haltemittel für eine Sitzsockelverkleidung (38) aufweist.

## Claims

1. An industrial truck (10) with a driver's cab (18), which comprises a seat carrier (42) which is detachably connected to at least one side wall of the driver's cab, which seat carrier can be fastened at two different heights at least to the at least one side wall and which carries a driver's seat (32) for an operator, **characterized by**:
a. a seat carrier (42) detachably connected to two different side walls (26, 28) of the driver's cab (18), and
b. a fastening means which is fastened to the two side walls (26, 28) of the driver's cab (18) and which is configured such that the seat carrier (42) can be fastened to the side walls at two different heights at least, wherein the fastening means comprises a first fastening means which has an insertion element (75) protruding from the seat carrier (42), wherein one of the side walls (26, 28) comprises two receptacles (74a, 74b), provided at a different height, for the protruding insertion element (75), and the seat carrier (42) has a cross member (44) which is equipped at the end with a second fastening means which has a cross member fastening plate (50) having fastening bores and the second of the two side walls (26, 28) comprises means for attaching the cross member fastening plate (50), wherein fastening bores and the means for attaching the cross member (44) to the second side wall are arranged at different heights.

2. The industrial truck according to Claim 1, **characterized in that** one of the side walls is arranged on a side facing the backrest (34) of the driver's seat (32).

3. The industrial truck according to Claim 1, **characterized in that** the second side wall comprises a fastening plate (52) having a supporting protrusion (54), on which the cross member fastening plate (50) still to be mounted can be braced.

4. The industrial truck according to Claim 3, **characterized in that** one of the bores is configured as a recess (60) on the cross member fastening plate (50), with which recess the cross member fastening plate (50) can be mounted, in a braced manner, on the means for attaching the cross member plate.

5. The industrial truck according to one of Claims 1 to 4, **characterized in that** the fastening means comprises a third fastening means, and the third fastening means, which is provided for fastening to the second side wall at various heights, is provided on the seat carrier (42).

6. The industrial truck according to Claim 5, **characterized in that** the third fastening means comprises a fastening bore on the seat carrier (42) and multiple means provided at various heights for attaching the third fastening means to the second side wall.

7. The industrial truck according to one of Claims 1 to 6, **characterized in that** the height of the driver's seat (32) is adjustable.

8. The industrial truck according to one of Claims 1 to 7, **characterized in that** the seat carrier (42) comprises holding means for a seat base covering (38).

## Revendications

1. Chariot de manutention (10) doté d'une cabine de conducteur (18) présentant un support de siège (42) relié de façon détachable à au moins une paroi latérale de la cabine de conducteur, lequel peut être fixé à l'au moins une paroi latérale à au moins deux hauteurs différentes et supporte un siège de conducteur (32) pour un opérateur, **caractérisé par** :
a. un support de siège (42) relié de façon détachable à deux parois latérales (26, 28) différentes de la cabine de conducteur (18) et
b. un moyen de fixation fixé aux deux parois latérales (26, 28) de la cabine de conducteur (18) et conçu de manière à ce que le support de siège (42) puisse être fixé à au moins deux hauteurs différentes aux parois latérales, dans lequel
le moyen de fixation présente un premier moyen de fixation possédant un élément d'insertion (75) faisant saillie sur le support de siège (42), dans lequel l'une des parois latérales (26, 28) présente deux logements (74a, 74b) prévus à des hauteurs différentes pour l'élément d'insertion (75) faisant saillie, et le support de siège (42) possède un support transversal (44) équipé d'un deuxième moyen de fixation côté extrémité, lequel possède une plaque de fixation de support transversal (50) avec des alésages de fixation, et la deuxième des deux parois latérales (26, 28) présente des moyens pour le montage de la plaque de fixation de support transversal (50), dans lequel les alésages de fixation et les moyens pour le montage du support transversal (44) sont disposés à des hauteurs différentes sur la deuxième paroi latérale.

2. Chariot de manutention selon la revendication 1,
**caractérisé en ce que** l'une des parois latérales est disposée sur un côté tourné vers le dossier (34) du siège de conducteur (32).

3. Chariot de manutention selon la revendication 1, **caractérisé en ce que** la deuxième paroi latérale présente une plaque de fixation (52) avec une saillie d'appui (54), sur laquelle la plaque de fixation de support transversal (50) à monter peut s'appuyer.

4. Chariot de manutention selon la revendication 3, **caractérisé en ce que** l'un des alésages sur la plaque de fixation de support transversal (50) est conçu comme une cavité (60), avec laquelle la plaque de fixation de support transversal (50) peut être montée en appui sur le moyen pour le montage de la plaque de support transversale.

5. Chariot de manutention selon l'une des revendications 1 à 4, **caractérisé en ce que** le moyen de fixation présente un troisième moyen de fixation et le troisième moyen de fixation est prévu sur le support de siège (42), lequel est prévu pour la fixation à la deuxième paroi latérale à différentes hauteurs.

6. Chariot de manutention selon la revendication 5, **caractérisé en ce que** le troisième moyen de fixation présente un alésage de fixation sur le support de siège (42) et plusieurs moyens prévus à différentes hauteurs pour le montage du troisième moyen de fixation sur la deuxième paroi latérale.

7. Chariot de manutention selon l'une des revendications 1 à 6, **caractérisé en ce que** le siège de conducteur (32) est réglable en hauteur.

8. Chariot de manutention selon l'une des revendications 1 à 7, **caractérisé en ce que** le support de siège (42) présente des moyens de retenue pour un habillage de socle de siège (38).
